# EUROPEAN PATENT APPLICATION

(11) **EP 4 723 300 A1**
(43) Date of publication of application: **08.04.2026**
(21) Application number: 25203102.6
(22) Date of filing: 18.09.2025
(51) Int. Cl.: H01M 10/613, H01M 10/625, H01M 10/6567, H01M 50/213, H01M 50/244, H01M 50/249, H01M 50/258, H01M 50/264, H01M 50/296, H01M 50/503, B60L 50/64

(54) **BATTERY PACK**

(30) Priority: 20.09.2024 US 202463696991 P; 17.12.2024 US 202463735305 P; 16.09.2025 US 202519329593
(71) Applicant: Xing Power Inc., Victoria, Mahe (SC)
(72) Inventor: Lin, Yu-Chung, 333 Taoyuan City (TW); Tu, Kai-Hsiang, 333 Taoyuan City (TW); Liao, Tzu-Wen, 333 Taoyuan City (TW); Chi, Yu-Shun, 333 Taoyuan City (TW); Dai, Shang-Chih, 333 Taoyuan City (TW); Wang, Fang-Hsien, 333 Taoyuan City (TW); Chuang, Chin-Yao, 333 Taoyuan City (TW); Wu, I-Jung, 333 Taoyuan City (TW)
(74) Representative: Straus, Alexander

(57) **Abstract**

An immersion-cooled battery pack(3030) includes at least one battery module(3010) having a plurality of battery cells(0020) held by a cell holder(0050) and electrically connected by battery-cell-connecting members(0026) inside a liquid-limiting casing(0080). The liquid-limiting casing(0080) provides a peripheral wall(0090) and top and bottom wall surfaces(0160, 0170) with interlocking structures(0180, 0190) for vertical stacking. Together with an interface module and a terminal or second interface module, the liquid-limiting casings(0080) form a liquid-tight battery-pack enclosure(3031) that contains thermal-management liquid. A liquid tank module(3070) acts as a buffer for liquid volume change and as an external liquid interface and is positioned above the liquid-tight battery-pack enclosure(3031) to provide a gravitational head. An electrical energy interface module(3060) relays high-voltage energy from the battery pack (3030) to a downstream load.

## Description

### Field of the Invention

The present disclosure generally relates to the integration of battery cells that is configured as a device that can both store and release electric energy according to the pre-characterizing clause of claim 1. To be specific, the present disclosure generally relates to a machine that is assembled from battery cells wherein all the battery cells are immersed in thermal-management liquid while operating.

### Background of the Invention

Electrical energy is widely used to power modern machines. At various stages of the life cycle of electric energy, such as generation, distribution, and consumption, the temporary storage and subsequent release of energy as needed are both significant and necessary.

A rechargeable battery cell is a device that stores electrical energy by converting it into chemical energy (i.e., during the charging process) and then reconverting it into electrical energy (i.e., during the discharging process). Depending on the application, battery cells are integrated through a variety of methods to meet the required electrical performance parameters.

The integration of battery cells, or in other words, a battery cell assembly, is typically considered a subsystem of an electric equipment. In this disclosure, the phrase "electric equipment" may be referred to an electrically powered machinery, a vehicle that has an electric motor as a prime mover, or an electric energy storage system that is connected electrically to a grid or power plant, or a computing machine (e.g. a server with IT gears, circuit boards, and/or integrated circuit component that are configured to perform computational or information processing functions). Thus, it is also critical to consider the integration between the battery cell assemblies and the electrical equipment.

Furthermore, it is well-known that integrating battery cells involves incorporating thermal management systems and battery management systems.

With the above-mentioned design considerations, optimizing the integration of battery cells presents significant challenges.

### Summary of the Invention

### I. Problems Addressed

Optimizing the integration of battery cells requires simultaneously managing thermal performance, electrical interfaces, mechanical stack-up, and manufacturability. In immersion systems, the thermal-management liquid is configured to directly contact the battery cells while its movement is limited so modules can be stacked and sealed into a liquid-tight battery-pack enclosure. The pack may be mounted in different orientations; as liquid volume changes with temperature, a liquid tank module is placed higher than the battery-pack enclosure so liquid in the tank has a higher gravitational potential than liquid in the enclosure, thereby avoiding trapped air and supporting fill/vent functions. Module-to-module interfaces use interlocking structures that generate lateral restraint under vertical stacking, and sealing-member features to prevent leakage at interfaces between liquid-limiting casings. Electrical integration relays high-voltage energy to a downstream load and can co-locate terminals by sealing vertical-wall channels into a vertical through-hole and arranging a conductor rod therein so both electrodes can be disposed at one vertical end. Cell positioning uses stopping structures that provide vertical reaction forces, and optional fixing structures to constrain displacement in every direction. Manufacturability accommodates integral forming (e.g., injection molding or die casting) or assembly from discrete side walls.

### II. Technical Effects

Immersion cooling maintains battery-cell temperature within a predetermined range and can mitigate combustion. Interlocking features on top and bottom wall surfaces at the vertical ends of casings provide lateral forces that limit relative displacement between stacked casings, increasing stack stability. Sealing-member-accommodating (and, in some embodiments, positioning) structures reduce leakage at casing-to-casing interfaces. A higher-mounted liquid tank module buffers volume change and serves as the liquid interface to external channels. A vertical through-hole with a conductor rod enables terminal co-location on one vertical end of the stack to simplify external connection. Cell-holder stopping and fixing structures restrain motion while preserving component space. Alternative manufacturing routes enable robust sealing and stacking with flexibility on cost and tolerances.

### III. Dependencies and Problem-Domain Containment

Root system architecture → LTM layouts, sealing, manufacturing: Claim 1 establishes immersion-capable modules, interlocking, the liquid-tight battery-pack enclosure, interface modules, and a higher-mounted liquid tank module; Claim 2 provides a hose-based LTM connection; Claim 11 provides an LTM integrated with the first interface module; Claim 19 adds an interface liquid connector for external circulation. Terminal co-location chain: Claim 1 → Claim 5 (vertical-wall channels sealed into a vertical through-hole) → Claim 6 (conductor rod in the through-hole) → Claim 7 (rod connection at a first vertical end and protrusion at the second vertical end enabling co-located terminals). Cell-restraint chain: Claim 1 → Claims 8-10 (stopping structure and inner-boundary variants) → Claim 14 (fixing structure with fastener). Liquid-domain policy: Claim 1 → Claim 12 (hydraulically continuous EEIM space and BP space) or Claim 13 (hydraulically isolated with a sealed electric channel). Containment: system-level immersion/integration contains module-level stacking/sealing/manufacturing, which contains cell-level restraint and intra-module electrical features; liquid-domain policy and terminal co-location intersect system integration and safety.

### IV. Aspects Corresponding to Each Claim

A first aspect provides a battery pack including at least one battery module with a plurality of cells, a cell holder with cell-receiving structures, battery-cell-connecting members, and a liquid-limiting casing having a peripheral wall that laterally surrounds a space and extends vertically, an inner wall surface on which the cell holder is fixed, and top and bottom wall surfaces at vertical ends bearing interlocking structures that limit lateral displacement when casings are stacked; the pack further includes a first interface module as a first vertical lid and a terminal module or a second interface module as a second vertical lid, where the first (and optionally second) electrical energy interface module relays high-voltage energy; the liquid-tight battery-pack enclosure is assembled from the casings and the vertical lids; and a liquid tank module buffers volume and provides an external liquid interface, disposed higher than the battery-pack enclosure so the tank liquid has greater gravitational potential than enclosure liquid.

Another aspect provides a flexible hose, with hose-connectors on the first interface module and the liquid tank module.

Another aspect provides that the second vertical lid is the second interface module, and the enclosure includes the casings, the first interface module, and the second interface module.

Another aspect provides that the second vertical lid is the terminal module, and the enclosure includes the casings, the first interface module, and the terminal module.

Another aspect provides vertical-wall channels in the casings, sealed together to form a vertical through-hole extending through the stacked modules.

Another aspect provides a conductor rod arranged in the vertical through-hole.

Another aspect provides that the conductor rod is connected to a first electrode at a first vertical end adjacent the terminal module and protrudes from a second vertical end adjacent the first interface module, enabling terminal co-location on the second end.

Another aspect provides at least one cell-holder stopping structure extending inward from an inner surface of the peripheral wall and configured to limit vertical movement of the cell holder by providing a vertical force.

Another aspect provides that the stopping structure has an inner boundary parallel to the side wall on which it is disposed, with a lateral section view that is a line or a curved line.

Another aspect provides that the lateral section view is a curved line with a radius of curvature equal to or greater than the battery cell radius in lateral section.

Another aspect provides that the liquid tank module is directly integrated with the first interface module so no hose is required between them.

Another aspect provides that the electrical energy interface module space and the battery-pack space are hydraulically continuous such that thermal-management liquid immerses components within both spaces.

Another aspect provides that the electrical energy interface module space and the battery-pack space are hydraulically isolated, and the first interface module includes a sealed electric channel with a sealing member tightly mating with a busbar.

Another aspect provides at least one cell-holder fixing structure including a fastener hole so the cell holder is mechanically fixed to the casing by a fixing fastener.

Another aspect provides that the battery-cell-connecting member includes a cell-contact plate and a current-transport plate, with a fusing structure on the cell-contact plate that melts under overload current.

Another aspect provides that at least one of the top and bottom wall surfaces includes a sealing-member-accommodating structure to receive an O-ring to prevent leakage between stacked casings.

Another aspect provides that the liquid-limiting casing is integrally formed by injection molding or die casting.

Another aspect provides that the peripheral wall is assembled from four discrete side walls or two partially surrounding walls.

Another aspect provides that the liquid tank module includes an interface liquid connector to connect the battery pack to an external liquid circulation system.

This summary is provided for technical information and convenience of understanding and is not intended to identify essential features, to delimit the scope of protection, or to be used to interpret the claims.

### Brief Description of the Drawings

In the following, the invention is further illustrated by way of example, taking reference to the accompanying drawings thereof:
FIG. 1 is a conceptual circuit diagram showing a charging-discharging circuit (0040) including a battery cell assembly (0010), battery cells (0020), and battery cell strings (0030),
FIGS. 2A and 2B are perspective views of an embodiment of the battery cell assembly (0010), wherein FIG. 2B is an exploded view showing a cell holder (0050), cell receiving structures (0060), and electrode surfaces (0024),
FIG. 2C is a perspective exploded view of a battery cell assembly (0010) showing battery-cell-connecting members (0026) and a cell holder (0050),
FIG. 2D is a detail view showing plate-holes (0029) of the battery-cell-connecting members (0026) engaged with vertical limiting structures (0070) of the cell holder (0050),
FIGS. 3A and 3B are conceptual perspective views showing two battery cell assemblies (0010) arranged in a stacked configuration (FIG. 3A) and in a side-by-side configuration (FIG. 3B),
FIG. 4A, FIG. 4B and FIG. 4C are top views of liquid-limiting casings (0080) of tubing form with a peripheral wall (0090),
FIGS. 5A and 5B are perspective views of a battery cell assembly (0010) arranged within a liquid-limiting casing (0080), wherein FIG. 5B is a vertically exploded view showing a top opening (0094), a bottom opening (0095), and two cell holders (0050),
FIG. 6A is a top view of a rectangular liquid-limiting casing (0080) with side walls (0091) designated east (0096), south (0097), west (0098), and north (0099),
FIG. 6B is a view of a liquid-limiting casing (0080) showing inner wall surfaces (0101), outer wall-surfaces (0106), inner corners (0120), outer corners (0125), corner pillars (0130), and side walls (0091),
FIG. 6C is a view of a peripheral wall (0090) assembled from two partially surrounding walls,
FIG. 6D is a view of a peripheral wall (0090) assembled from four independent side walls (0091),
FIG. 7A, FIG. 7B and FIG. 7C are top views of a liquid-limiting casing (0080) showing cell-holder stopping structures (0140) extending inward from the inner surface of the peripheral wall (0090) and inner boundaries (0141), wherein FIG. 7C includes a battery cell assembly (0010) with a cell holder (0050) and a section line A-A',
FIG. 7D is a vertical section view taken along A-A' of FIG. 7C showing relative positions of a peripheral wall (0090), a cell-holder stopping structure (0140), and spaces above and below the stopping structure,
FIG. 7E is a view of a liquid-limiting casing (0080) showing discrete cell-holder stopping structures (0140) on an inner-north surface (0105) of a north wall (0099),
FIG. 8A, FIG. 8B and FIG. 8C illustrate cell-holder fixing structures (0150) within a liquid-limiting casing (0080), wherein FIG. 8A is a top view showing fixing structures (0150) with fastener holes (0151), FIG. 8B is a top view showing a cell holder (0050) with fixing fasteners (0152), and FIG. 8C is a section view along B-B' showing a cell holder (0050), a stopping structure (0140), and fixing fasteners (0152),
FIGS. 9A and 9B are perspective views showing two stacked battery cell assemblies (0010),
FIG. 10A is a view of a liquid-limiting casing (0080) showing a top wall surface (0160), a bottom wall surface (0170), top surface interlocking structures (0180), and bottom surface interlocking structures (0190),
FIG. 10B is a view of two liquid-limiting casings (0080) stacked with the interlocking structures (0180, 0190) engaged,
FIGS. 11A and 11B show sealing features at an interface between liquid-limiting casings (0080), wherein FIG. 11A shows a sealing-member-accommodating structure (0220) and a sealing-member-positioning structure (0210), and FIG. 11B shows a sealing member (0200), such as an O-ring, disposed in the accommodating structure,
FIG. 12A is a view showing a vertical-wall-channel (0230) with a PCB of a cell monitoring device (0260) associated with a battery-cell-connecting member (0026),
FIG. 12B is a view showing a vertical-wall-channel (0230) with a conductor rod (0280),
FIG. 13 is a perspective view of a battery pack (3030) including battery modules (3010), a terminal module (3040), an interface module (3050), and an electrical energy interface module (3060),
FIG. 14A and FIG. 14B are conceptual diagrams of a battery pack (3030), with the electrical energy interface module omitted, showing different mounting orientations relative to a gravity vector and placement of a liquid tank module (3070) and a hose (3071),
FIG. 15 is a view of an interface module (3050) integrated with a liquid tank module (3070) including an LTM-casing (3074) and an LTM-space (3075),

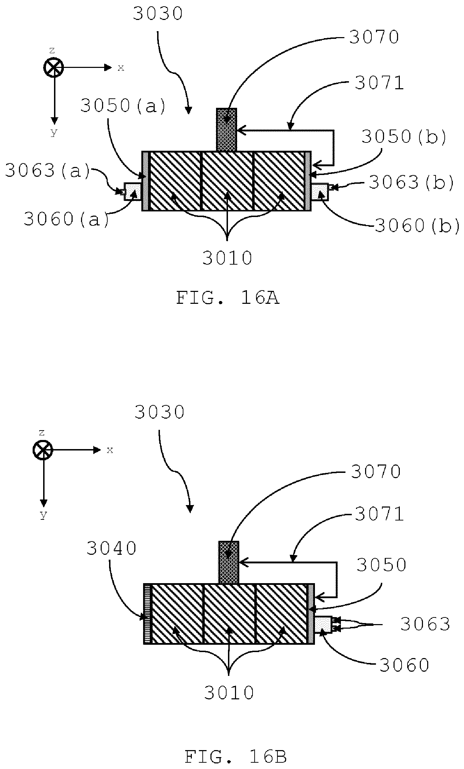

FIGS. 16A and 16B are conceptual diagrams of battery pack architectures, wherein FIG. 16A shows multiple battery modules (3010) stacked between first and second interface modules (3050a, 3050b) with electrical energy interface modules (3060a, 3060b) and high-voltage interface connectors (3063) at opposite vertical ends, and FIG. 16B shows battery modules between a terminal module (3040) and an interface module (3050) with an electrical energy interface module (3060) and two high-voltage interface connectors (3063) on the same vertical end, and vertical-wall-channels (0230) sealed to form a vertical through hole with a conductor rod (0280), and
FIGS. 17A and 17B are conceptual diagrams illustrating orientations relative to a gravity vector with a liquid tank module (3070) disposed on the interface module (3050).

### Detailed Description

Before the disclosure is described in greater detail, it should be noted that where considered appropriate, reference numerals have been repeated among the figures to indicate corresponding or analogous elements, which may optionally have similar characteristics.

To aid in describing the disclosure, directional terms may be used in the specification and claims to describe portions of the present disclosure (e.g., front, rear, left, right, top, bottom, etc.). Unless specifically defined, these directional definitions are intended to merely assist, in describing and claiming the disclosure and are not intended to limit the disclosure in any way.

The following contains specific information pertaining to example implementations in the present disclosure. The drawings and their accompanying detailed disclosure are directed to merely example implementations of the present disclosure. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including but not necessarily limited to"; it specifically indicates open-ended inclusion or membership in the disclosed combination, group, series, and the equivalent.

Additionally, for a non-limiting explanation, specific details, such as functional entities, techniques, protocols, standards, and the like, are set forth for providing an understanding of the disclosed technology. In other examples, detailed disclosure of well-known methods, technologies, systems, architectures, and the like are omitted so as not to obscure the present disclosure with unnecessary details.

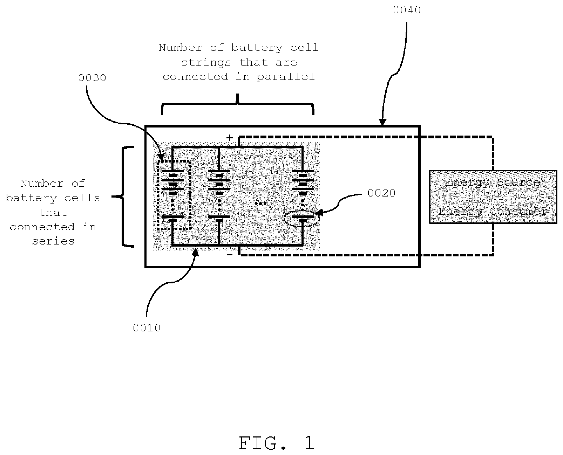

FIG. 1 is a conceptual circuit diagram of a charging-discharging circuit 0040. In FIG. 1, the charging-discharging circuit comprises a "battery cell assembly" 0010 (hereafter, BCA). The BCA 0010 is configured for meeting the required electrical performance, for example, a required target output voltage, Ampere or power. To meet such requirements, battery cells may be integrated, e.g. be assembled, into a BCA 0010 to provide a collective performance.

As illustrated in FIG.1, in some embodiments, a BCA 0010 may comprise one or more battery cell strings 0030 (hereafter, BCS) that are connected electrically in parallel. The number of BCSs 0030 that are connected in parallel would determine the overall current output of the BCA 0010. Furthermore, each of the BCSs 0030 may comprise one or more battery cells 0020 (hereafter, BC) that are connected electrically in series. The number of BCs 0020 in each of the BCSs 0030, that are connected in series, would determine the overall voltage output of the BCS 0030 and the BCA0010.

The charging-discharging circuit 0040 may be connected to an energy source such as a charging station therefore to charge the BCA 0010. The charging-discharging circuit may also be connected to an energy consumer such as a prime mover of an electric vehicle therefore power the prime mover.

In some embodiments (not shown in FIG. 1), the charging-discharging circuit 0040 may comprise more than one BCAs 0010.

Referring back to the FIG. 1, depending on the technology used, BCs 0020 may have different specifications in aspects such as shape, electrical performance (such as: output voltage, current, power, charging rate, discharging rate, or working temperatures, etc.), materials, and other characteristics. For example, BCs 0020 can be encapsulated in various forms, such as cylindrical, prismatic, or pouch. In this disclosure, unless specifically specified, those skilled in this art should understand that the technological features disclosed hereby would not necessarily be limited to certain type of BCs 0020.

To be configured as the fundamental component to transfer electric energy into chemical energy, or reversely, a BC 0020 may comprise positive and negative electrodes as the interface between: 1. the charging-discharging circuit 0040 to which the BC 0020 connected; and 2. the cathode material and the anode material that is encapsulated in the BC 0020.

Furthermore, BCs 0020, configured as fundamental energy-storing building blocks of the BCA 0010 and the charging-discharging circuit 0040, must be connected electrically. No matter if a BC 0020 is a cylindrical, prismatic or pouch type, the electrodes of the BC 0020 are usually disposed on the top-end, on the bottom-end, or on both ends of the body of the BC 0020 respectively. In such cases, BCs 0020 are usually mechanically aligned side-by-side, so the electrodes of each of the BCs 0020 may be aligned approximately on the same plane. As a result, the body of BCA 0010 may comprise at least one electrode-surface 0024, where the electrodes of BCs 0020 are located and distributed.

In some embodiments, BCA 0010 may comprise battery-cell-connecting members 0026 (hereafter, BCCM) that are electrical conductors configured to connect to the electrodes of the BCs 0020. Through BCCM 0026, the BCs 0020 are electrically connected in parallel, or in series. For example, planar shaped conductor plates may be arranged on the electrode-surface 0024, to connect electrodes of the BCs 0020.

In this disclosure, when referring the direction, the terms "lateral" and "laterally" refer to the directions that lies on the plane on which the electrodes of BCs 0020 of a BCA 0010 be arranged on and refer to the directions that are parallel to the lines that lie on the plane on which the BCs 0020 of a BCA 0010 side-by-side distributed. In FIGs of this disclosure, the lateral directions are marked as the directions that are parallel to the lines that lie on the y-z plane. The term "top-viewed" means the section viewing from the positive x direction towards the minus x direction.

In this disclosure, the terms "vertical" and "vertically" means a direction that is not a "lateral direction" and is orthogonal to "any lateral direction". By this definition, the electrodes of the BC 0020 are usually disposed on at least one the vertical ends of the body of the BC 0020. In FIGs of this disclosure, the vertical direction refers to the direction along the x-direction.

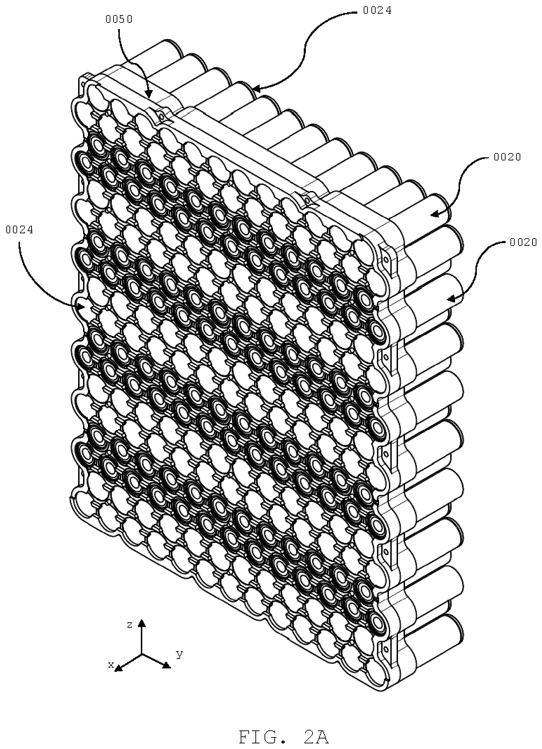

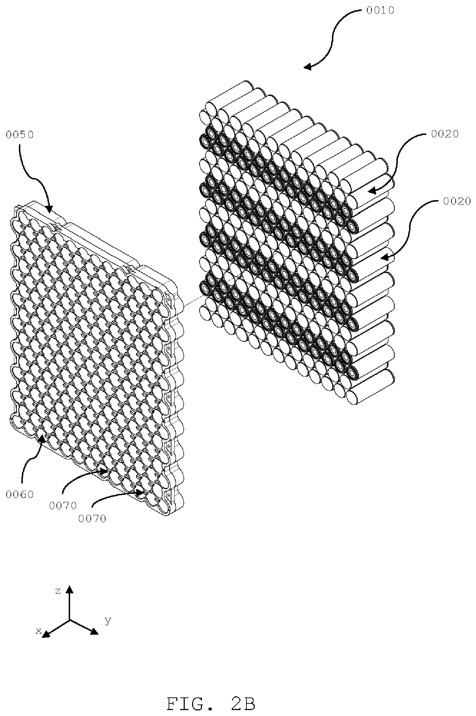

For example, referring to FIGS. 2A and 2B, that are perspective views of an embodiment of BCA 0010 (not all the components of the BCA 0010 are depicted); wherein FIG. 2B is an exploded view of FIG. 2A. In FIGS. 2A and 2B, the body of BCs 0020 may extend vertically (along the x-direction). Furthermore, the top-bottom axis of the BCs 0020 is parallel to the x-direction; and the BCs 0020 are side-by-side aligned along the y-z plane.

To integrate the BCs 0020 mechanically or structurally, in some embodiments, the BCA 0010 may comprise at least one cell holder 0050 which may have a primary function of limiting the position of each of a BC 0020 in a certain configuration. For example, the limiting of the position of a BC 0020 may be: 1. limiting the relative position of a specific BC 0020 respect to any other BCs 0020 that belong to the same BCA 0010 of the specific BC 0020; and 2. Limiting the relative position of a specific BC 0020 respect to the body of the BCA 0010. For example, in FIG. 2A, part of the body of each BCs 0020 are disposed in a corresponded cell receiving structures 0060 of the cell holder 0050. The cell receiving structures 0060 are distributed periodically along the lateral direction. Therefore, once the BCs 0020 are disposed in the cell receiving structures 0060, these BCs 0020 may by arranged with such periodically spatial distribution laterally.

In some embodiments, the cell holder 0050 may comprise vertical limiting structures 0070 to limit the vertical movement of the BCs 0020. The body and electrodes of all BCs 0020 of a BCA 0010 may be aligned in an identical vertical position, therefore, formed as the electrode surface 0024 of the BCA 0010. For example, in FIG. 2A, the BCA 0010 comprises two electrode surfaces 0024 at both sides of x-direction.

In some embodiments, adhesives might be used to provide the displacement limiting function. For example, after placing the BCs 0020 within the cell receiving structure 0060 of the cell holder 0050, glues might be introduced to fix the BCs 0020 additionally.

In some embodiments, to integrate the BCs 0020 electrically, the BCA 0010 may comprise BCCM 0026 that is located on the electrode-surface 0024. Furthermore, the BCA 0010 may comprise mechanical means that is configured to maintain the relative position between the electrode-surface 0024 and BCCM 0026 in static. For example, as the BCs 0020 are fixed mechanically with the cell holder 0050, BCCM 0026 may be connected mechanically with the cell holder 0050.

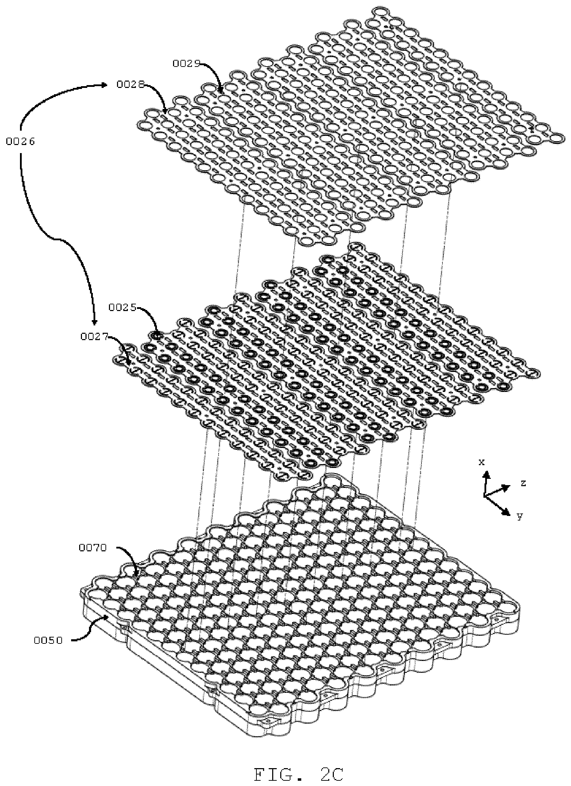

For example, in FIG. 2C, a perspective exploded view of an exemplary BCA 0010 (the BCs and some components are not shown), the BCA 0010 comprises a cell holder 0050 and BCCMs 0026. The BCCMs 0026 is conductive material that formed in plate-shaped. The BCCMs 0026 are configured to be disposed on the cell holder 0050, also, be disposed on the electrode-surface 0024 of the BCA 0010.

In some embodiments, the BCCM 0026 may comprise a cell-contact-plate 0027 and a current-transport-plate 0028.

The cell-contact-plate 0027 may be configured to directly contact the electrode of the BCs. Connecting processes such as welding, crimping, fastening, or the use of conductive adhesives, may be used to connect the cell-contact plate 0027 and the electrodes of the BCs. Furthermore, in some cases, the cell-contact plate 0027 may comprise a fusing welding structure 0025, that is configured to be melted when the current is overloaded.

The current-transport-plate 0028 may be configured to transport the collective current of multiple BCs 0020. In such a purpose, the current-transport-plate 0028 may have a greater thickness than the cell-contact-plate 0027. Furthermore, the current-transport-plate 0028 may have greater conductivity than the cell-contact-plate 0027. For example, the cell-contact-plate 0027 may be a nickel plate, and the current-transport-plate 0028 may be a copper plate.

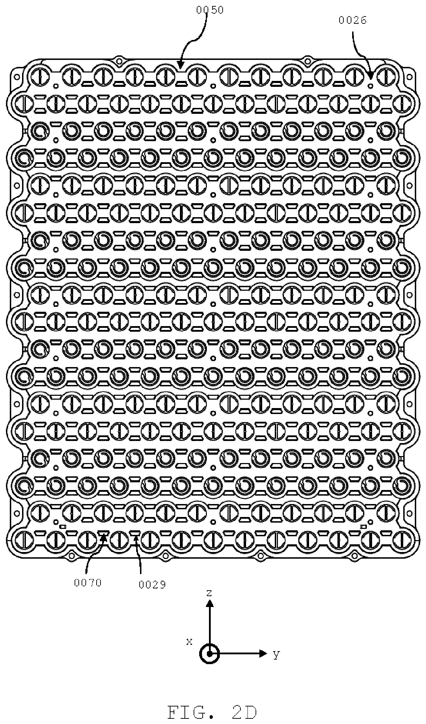

In some embodiments, the BCCM 0026 may comprise structures that are configured for arranging the BCCM 0026 on the cell holder 0050. For example, the BCCM 0026 may comprise extrusions or protrusions that are configured to be engaged with a hollow structure on the cell holder 0050. For another example, the BCCM 0026 may comprise holes that are configured to be engaged with extrusions or protrusions on the cell holder 0050. For example, in FIGS. 2C and 2D, the BCCMs 0026 comprises plate-holes 0029 that is engaged with the vertical limiting structures 0070 of the cell holder 0050. The vertical limiting structures 0070 penetrate through the plate holes 0029 of the BCCMs 0026 to limit the relative movement of the BCCMs 0026 respect to the cell holder 0050. For example, the lateral and vertical relative movement of the BCCMs 0026 respect to the cell holder 0050 may be limited.

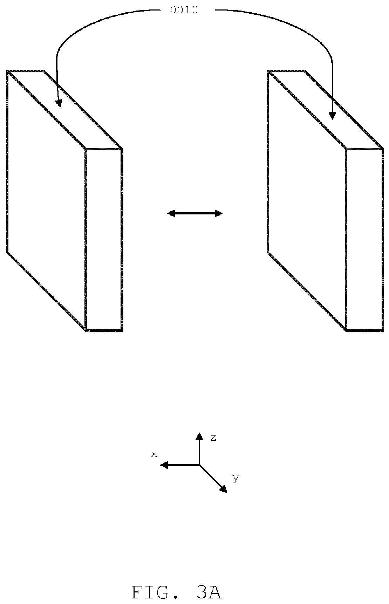

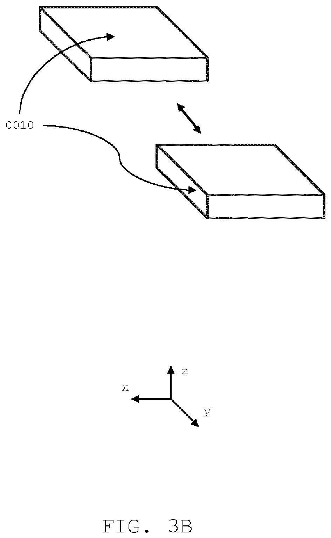

FIG. 3A and 3B are conceptual perspective views of the integration between two BCAs 0010. Depending on the available space to install the BCAs 0010 on the electric equipment, the BCAs 0010 may be integrated in a stacking manner or in a side-by-side manner. For example, in FIG. 3A, the BCAs 0010 are integrated in a stacking manner, and it's suitable to be arranged in a narrow and long space, such as the front and rear compartments of a passenger vehicle. In another example, in FIG. 3B, the BCAs 0010 are integrated in a side-by-side manner, and it's suitable to be arranged in a space with ample width but limited height, such as the floor space under the cabinet of a passenger vehicle.

In this disclosure, the terms "vertical" and "vertically" also refers to the stacking direction of the BCAs of stacking type integration. For example, in FIG. 3A, the stacking type integrated BCAs are stacked along the vertical direction, also, the x-direction.

To prevent the thermal runaway event, maintain the working temperature of the BCA 0010 and BCs 0020, or both. It is known to make the BCs 0020 directly contact thermal-management liquid, so that the thermal-management liquid may transport heat to maintain the working temperature of the BCs 0020 in a predetermined range or to prevent a combustion reaction. For example, the BCA(s) 0010 or BCs 0020 may be partially or entirely immersed in the thermal-management liquid. In the case of the entire immersion of the BCA(s) 0010, the BCA 0010 and some other components that are intended to be integrated with the BCA 0010 may direct contact with the thermal-management liquid, therefore has a better effect on thermal management.

To immerse the BCA 0010 in the thermal-management liquid, the BCA 0010 may be integrated with a liquid-limiting casing 0080 (hereafter, LLC). The LLC 0080 may be configured to limit the movement of the thermal-management liquid. For example, in the space described by the Cartesian coordinate system, certain volumes of thermal-management liquid may have displacement or velocity that may be described by a vector comprising components of unit-vectors of x, y, or z direction times coefficient respectively. LLC 0080 may comprise means to limit the movement of the thermal-management liquid in at least part of those six directions, to maintain the relative position between the BCA 0010 and the thermal-management liquid in state that the BCA 0010 is immersed in the thermal-management liquid.

In some embodiments, impervious materials may be used to form certain structures that entirely encapsulate or partially cover the thermal-management liquid, therefore to limit the movement of the thermal-management liquid in all directions or in some direction. For example, LLC 0080 may be formed as a tubing shape with two openings, such as triangular tube, square tube or round tube. The tubing shaped LLC 0080 may comprise a peripheral wall 0090 (or in other words, the circumferential wall).

In some embodiments, peripheral wall of the LLC 0080 may comprise impervious membranes to limit the movement of the thermal-management liquid.

In some embodiments, the LLC 0080 may comprise rigid structure such as impervious walls to limit the movement of the thermal-management liquid.

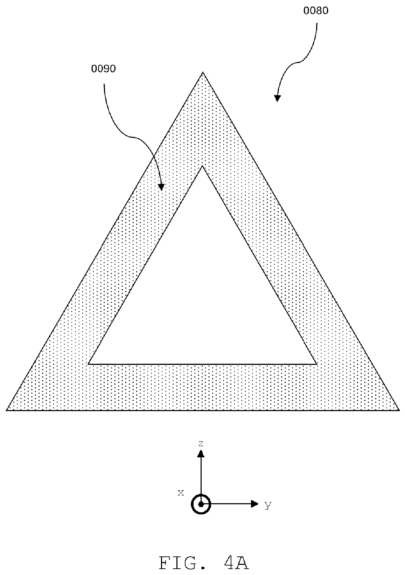

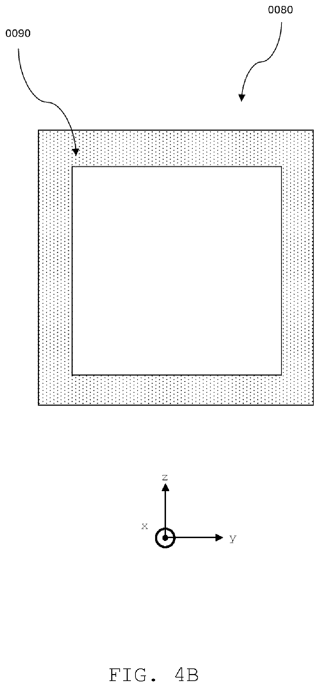

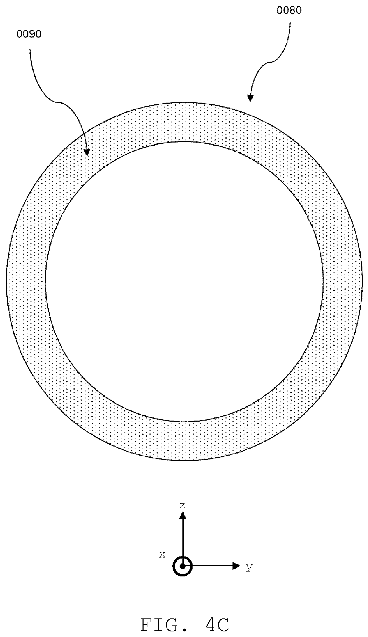

For example, FIGS. 4A, 4B and 4C are conceptual LLC 0080 in tubing structures depicted in top views. In other examples, the lateral view (i.e. top view) of the tubing structure may be asymmetrical geomatics. In FIGS. 4A, 4B and 4C, each of the depicted LLCs 0080 comprises a peripheral wall 0090 that surrounds a space laterally. The peripheral wall 0090 may extend vertically, i.e. along the x direction in FIGS. 4A, 4B and 4C. Therefore, the three-dimensional space surrounded by the LLC 0080 may be used to accommodate the thermal-management liquid, the BCA 0010, and some components that are intended to be integrated with the BCA 0010. With the impervious property of the peripheral wall 0090, the thermal-management liquid that accommodated in the LLC 0080 may only move in the vertical direction.

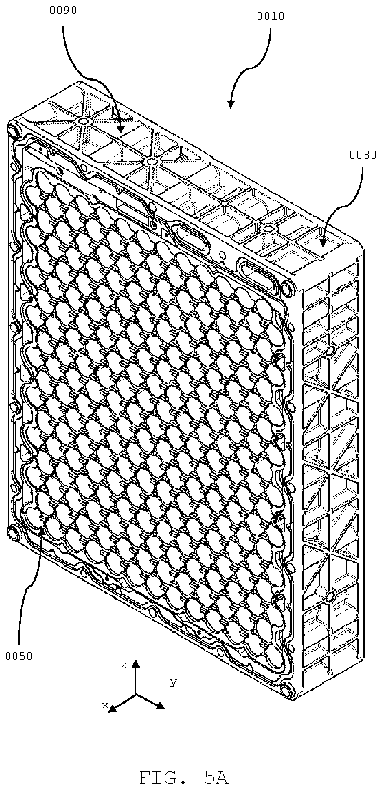

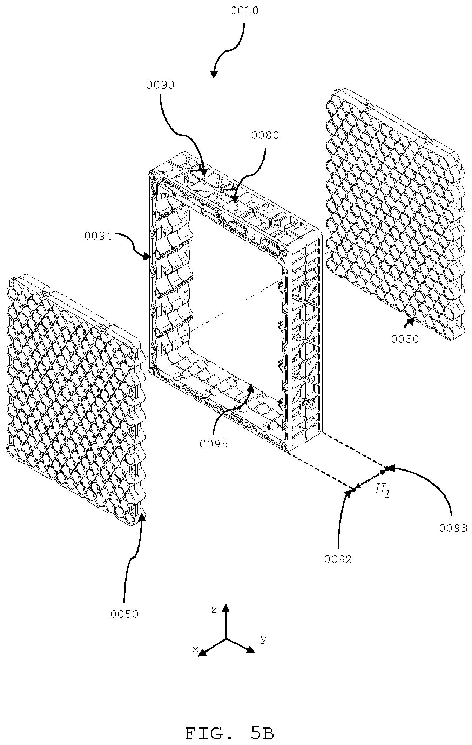

FIGS. 5A and 5B are perspective views of one exemplary embodiment of the BCA 0010, where not all components of the BCA 0010 are shown, for the purpose of clearly specifying the means to make the BCA 0010 be immersed in the thermal-management liquid. For example, the BCs 0020 are not shown in FIGS. 5A and 5B.

FIG. 5B is a vertically exploded perspective view of FIG 5A. In the embodiment of FIGS. 5A and 5B, the BCA 0010 comprises two cell holders 0050 that are integrated with the BCs 0020 (BCs 0020 are not shown in FIGS. 5A and 5B). The cell holders 0050, the BCs 0020, and some other not-shown components that are intended to be integrated with the BCA 0010 may be arranged within the space surrounded by the LLC 0080.

In the embodiments that the LLC 0080 is formed in a tubing shape, the peripheral wall 0090 may be formed as a material that extends between a top vertical position 0092 and a bottom vertical position 0093, along the vertical direction. At the top vertical position 0092, the inner-edge of the peripheral wall 0090 defines a top opening 0094 of the LLC 0080; and, at the bottom vertical position 0093, the inner edge of the peripheral wall 0090 may define a bottom opening 0095 of the LLC 0080. The top opening 0094 and the bottom opening 0095 may be configured as the entrance or exit of the space surrounded by the peripheral wall 0090. Components such as the BCs 0020, cell holders 0050 and other components that are intended to be arranged within the LLC 0080, may be arranged into the inside space of the LLC 0080 through at least one of the top opening 0094 and the bottom opening 0095.

For example, in the embodiment depicted in FIG. 5B, the peripheral wall is extended between the top vertical position 0092 and the bottom vertical position 0093. The vertical length of the LLC 0080 (that is, the height) is equal to the vertical distance between the top vertical position 0092 and the bottom vertical position 0093 H1. The two cell holders are disposed into the space surrounded by the peripheral wall 0090 through the top opening 0094 and the bottom opening 0095.

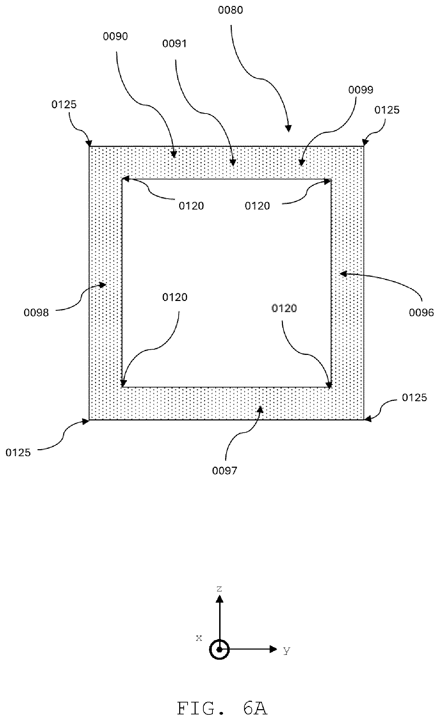

In some embodiments that the LLC 0080 are formed in a rectangular tubing shape, the peripheral wall 0090 of the LLC 0080 may further comprise four planar side walls 0091 that are arranged circumferentially surround and parallel to a vertical axis. For example, in FIG. 6A, a top view of an exemplary LLC 0080 is depicted. The LLC 0080 comprises four side walls 0091: an east wall 0096, a south wall 0097, a west wall 0098, and a north wall 0099, that are arranged circumferentially surround a vertical axis.

In some embodiments, the LLC 0080 may be fabricated using integral forming processes such as injection molding or die casting. Alternatively, a lathe machining process may be employed to produce the LLC 0080.

Referring to FIG. 6A-6B, in some embodiments that the LLC 0080 are formed in a rectangular tubing shape, the peripheral wall 0090 of the LLC 0080 may comprise four inner corners 0120 and four outer corners 0125. The four inner corners 0120 may further include: an inner-northeast corner 0121, an inner-southeast corner 0122, an inner-southwest corner 0123, and an inner-northwest corner 0124. The four outer corners 0125 may further comprise: an outer-northeast corner 0126, an outer-southeast corner 0127, an outer-southwest corner 0128, and an outer northwest-corner 0129.

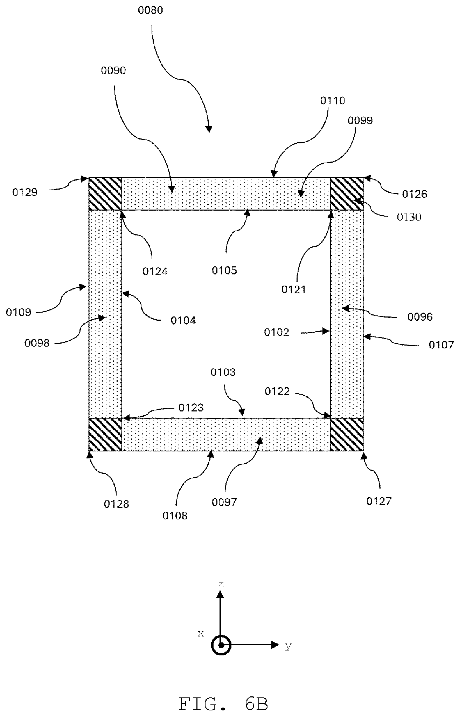

In some embodiments, each of the side walls may comprise an inner wall surface 0101 and an outer wall-surface 0106. The outer wall-surfaces 0106 of each side walls 0091 may be an outer planar surface that may extend between one of the two outer corner of the corresponding side wall 0091. For example, in FIG. 6B, the east wall 0096 comprises an outer-east surface 0107 that extends between the outer-northeast corner 0126 and the outer-southeast corner 0127; the south wall 0097 comprises a outer-south surface 0108 that extends between the outer-southeast corner 0127 and the outer-southwest corner 0128; the west wall 0098 comprises a outer-west surface 0109 that extends between the outer-southwest corner 0128 and the outer-northwest corner 0129; and the north wall 0099 comprises a outer-north surface 0110 that extends between the outer-northwest corner 0129 and the outer-northeast corner 0126.

Furthermore, the inner wall surfaces 0101 of each side walls 0091 may be an inner planar surface that may extend between one of the two inner corner of the corresponding side wall 0091. For example, in FIG. 6B, the east wall 0096 comprises an inner-east surface 0102 that extends between the inner-northeast corner 0121 and the inner-southeast corner 0122; the south wall 0097 comprises an inner-south surface 0103 that extends between the inner-southeast corner 0122 and the inner-southwest corner 0123; the west wall 0098 comprises an inner-west surface 0104 that extends between the inner-southwest corner 0123 and the inner-northwest corner 0123; and the north wall 0099 comprises an inner-north surface 0105 that extends between the inner-northwest corner 0124 and the inner-northeast corner 0121.

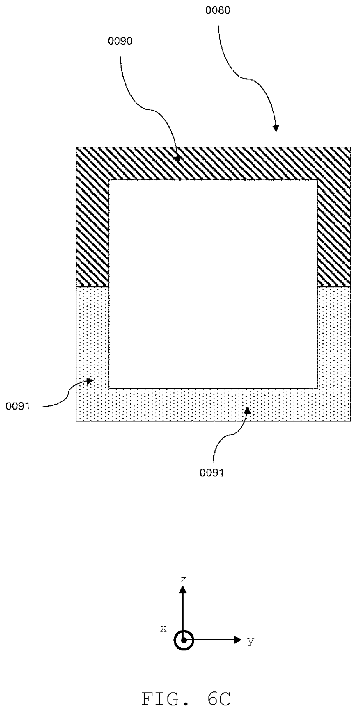

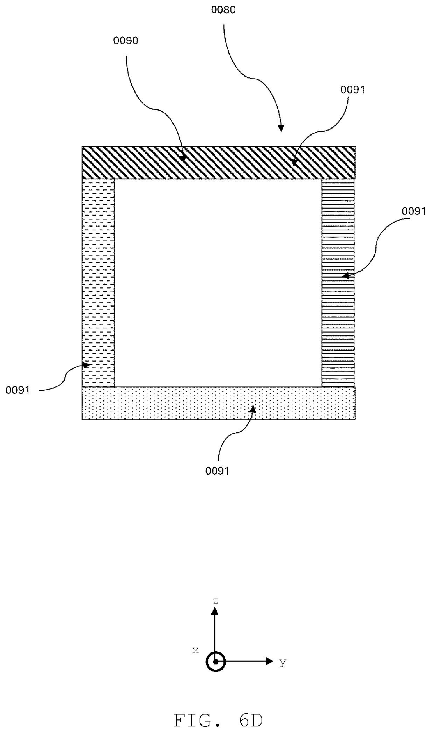

In some embodiments, the peripheral wall 0090 may be assembled by discrete components. For example, in FIG. 6B, the LLC 0080 comprises four corner pillars 0130 that are independent components to be assembled with the side walls 0091 (i.e. the east wall 0096, the south wall 0097, the west wall 0098, and the north wall 0099) to form the peripheral wall 0090. In other examples, referring to FIG. 6C, the peripheral wall 0090 may be assembled by two partially-surrounding walls. In other examples, referring to FIG. 6D, the peripheral wall 0090 may be assembled by four independent side walls 0091.

In some embodiments, the LLC 0080 may comprise structures that are configured for the integration of the cell holder 0050 and the LLC 0080. In the cases that the LLC 0080 is in the tubing shape such as depicted in FIGS. 4A, 4B and 4C, the cell holder 0050 may be disposed in the space surrounded by the LLC 0080 through one of the top opening 0094 and the bottom opening 0095 at the two vertical ends of the tubing structure. The LLC 0080 may comprise at least one cell-holder stopping structure 0140 that extends from one of the inner surfaces of the peripheral wall 0090 and extends inwardly along the lateral direction.

The vertically relative position on the inner surface of the peripheral wall 0090, and the vertical size of the cell-holder stopping structure 0140 would define the vertical depth (vertical range) that the cell holder 0050 may arrive vertically in the space surrounded by the LLC. Therefore, such a lateral structure (i.e. the cell-holder stopping structure 0140) may limit the vertical movement of the cell holder 0050, by providing a vertical force on the cell holder 0050. Such vertical force is against the vertical movement of the cell holder 0050 in the space surrounded by the peripheral wall 0090.

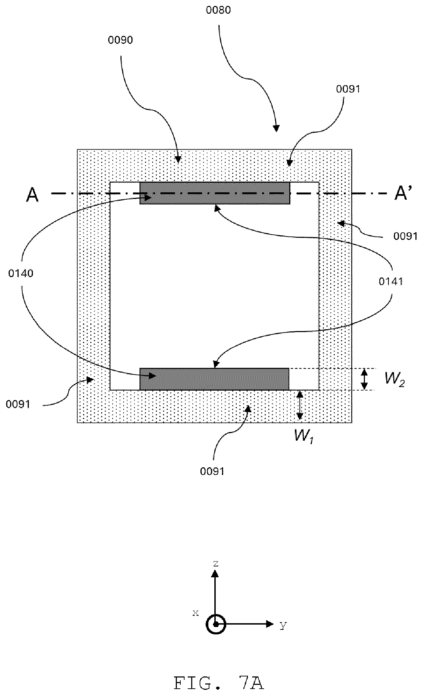

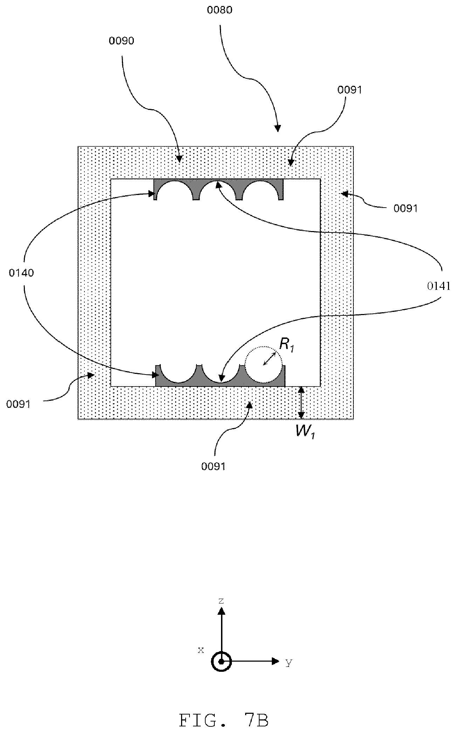

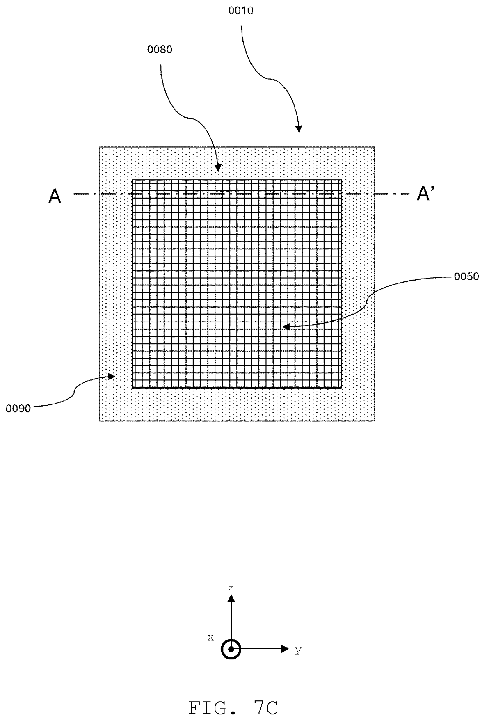

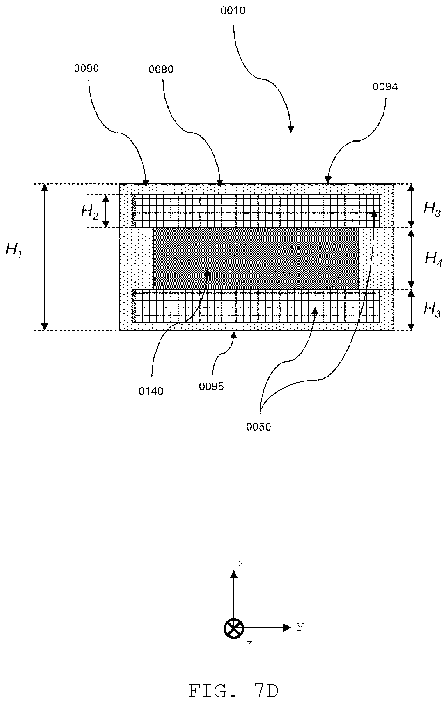

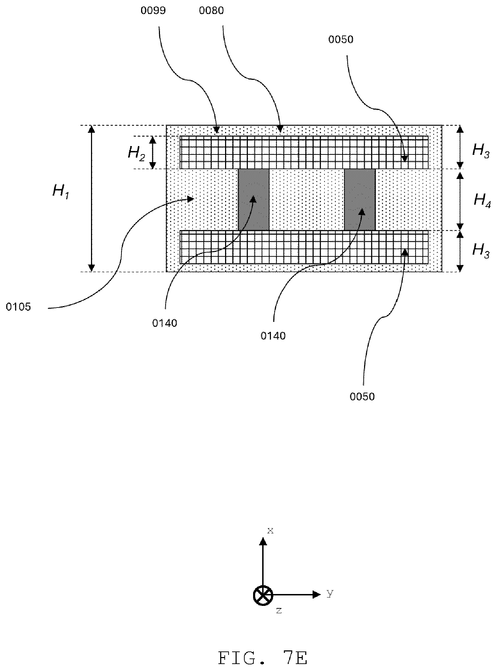

For example, FIGS. 7A, 7B, 7C, 7D and 7E are conceptual diagrams of an exemplary BCA 0010. FIGS. 7A, 7B and 7C are top-view of exemplary BCAs 0010. In FIG. 7A, the BCA 0010 comprises an LLC 0080, and the LLC 0080 comprises a peripheral wall 0090. The peripheral wall comprises four side walls 0091. The LLC 0080 further comprises two cell-holder stopping structures 0140 that extend laterally and inwardly from the inner surface of the peripheral wall 0090. Each of the two cell-holder stopping structures 0140 may comprise an inner boundary 0141. The lateral section view (top-view) of the inner boundary 0141 may be a line on the lateral plane. In the embodiment depicted in FIG. 7A, each of the inner boundaries 0141 is a planar surface that is parallel to the side wall on which the cell-holder stopping structure 0140 disposed; and the lateral section view of the inner boundary 0141 is a straight line along the y direction. In FIG. 7A, the maximum distance between the inner boundary 0141 and the inner surface of the side wall 0091 on which the cell-holder stopping structure 0140 disposed is a constant number; for example, in FIG. 7A, such a constant distance is equal to W2.

In other embodiments, the inner boundaries 0141 may not be a plane, that is, the distance between the inner boundary 0141 and the inner surface of the side wall 0091 on which the cell-holder stopping structure 0140 may not be a constant number. For example, in FIG. 7B, the inner boundaries 0141 are curved surfaces; and the lateral section view of the inner boundaries 0141 are curved lines on the lateral plane.

In some embodiments, such as depicted in FIG. 7B, the curve-shaped inner boundaries 0141 of the cell-holder stopping structure 0140 may provide additional space to accommodate components of the BCA 0010, such as the BCs 0020 or others. In some cases, the curved part of the inner boundaries 0141 may comprise a lateral section view that is a curved line with a radius of curvature equal to or greater than the radius of the BC's laterally section-viewed radius. Therefore, the BCs 0020 may be disposed in the space that is partially surrounded by the curved parts of the inner boundaries 0141 of the cell-holder stopping structures 0140.

In FIG. 7C, an exemplary BCA 0010 is depicted. The BCA 0010 comprises a cell holder 0050 that is disposed in the space that is surrounded by the peripheral wall 0090 of the LLC 0080. The dashed line A-A' is marked respect to the section that is shown in FIG. 7D.

In FIG. 7D, the vertical section view along the dashed line A-A' in FIG. 7C is depicted. The BCA 0010 comprises an LLC 0080 which further comprises a peripheral wall 0090. The LLC also comprises two cell holders 0050; and two cell-holder stopping structures 0140 (only one is shown). The cell-holder stopping structure 0140 is located at the inner surface of the peripheral wall 0090. Vertically, the middle of the cell-holder stopping structure 0140 is aligned with the middle of the peripheral wall 0090.

In some embodiments, the vertical length (hereafter, height) of the cell-holder stopping structure 0140 is less than the height of the peripheral wall 0090; therefore, the difference between the height of the cell-holder stopping structure 0140 and the height of the peripheral wall 0090 may provide a space to accommodate the cell holder 0050. For example, in FIG. 7D, the height of the cell-holder stopping structures 0140 is equal to H4, and the height of the peripheral wall 0090 is equal to H1. The difference between H1 and H4 is equal to two times of the H3. Therefore, the cell holder 0050 may be accommodated in the space between the top opening 0094 of the LLC 0080 and the cell-holder stopping structure 0140, such a space has a height equal to H3; and the cell holder 0050 may also be accommodated in the space between the bottom opening 0095 of the LLC 0080 and the cell-holder stopping structure 0140, such a space has a height equal to H3.

In some embodiments, the LLC 0080 may comprise discrete cell-holder stopping structures 0140 that are disposed on the inner surface of a side wall 0091. For example, referring to FIG. 7E, the LLC 0080 comprises a north wall 0099, and two cell-holder stopping structures that are disposed on the inner-north surface 0105.

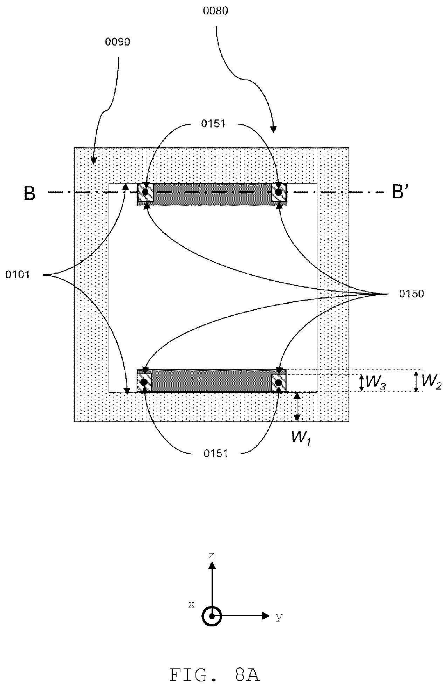

In some embodiments, the LLC 0080 may comprise at least one cell-holder fixing structure 0150 that provides mechanical means to limit the displacement of the cell holder in every direction. For example, referring to FIG. 8A, the top-viewed LLC 0080 comprises four cell-holder fixing structures 0150 that are extended from the inner wall surfaces 0101 of the peripheral wall 0090. In this embodiment, the cell-holder fixing structures 0150 comprises fastener holes 0151 for using fixing fasteners to limit the relative movement between the LLC 0080 and the cell holder 0050. In some embodiments, the cell-holder fixing structure 0150 and the cell-holder stopping structure may be different in multiple aspects such as shape, lateral position, and vertical position.

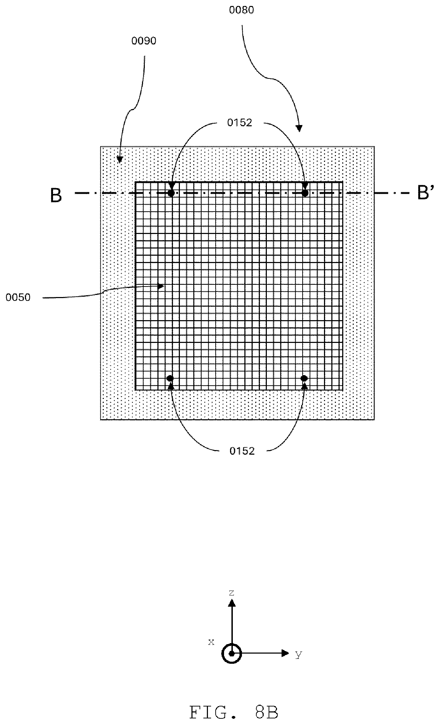

Referring to FIG. 8B, a top view of the LLC 0080 is depicted. In FIG. 8B, the cell holder 0050 is disposed in the space surrounded by the peripheral wall of the LLC 0080. The LLC 0080 comprises four fixing fasteners 0152 that are vertically inserted through the cell holder 0050 and the cell-holder fixing structures 0150 (not shown in FIG. 8B)

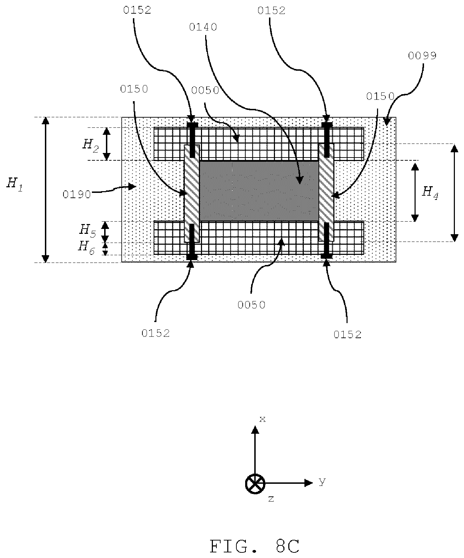

Referring to FIG. 8C, a section view along the dashed-line B-B' of the LLC 0080 depicted in FIG. 8B. As illustrated, the cell holder 0050 is stopped vertically by the cell-holder stopping structure 0140 and is fixed with the LLC 0080 by fastening the cell holder 0050 and the LLC 0080, by the fixing fasteners 0152.

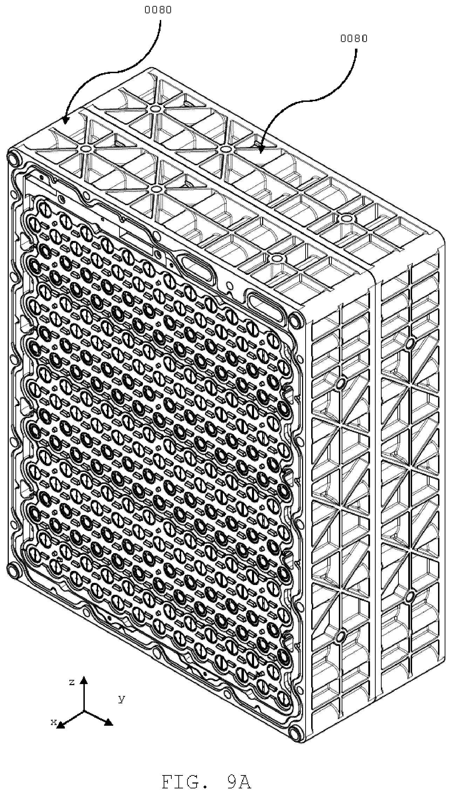

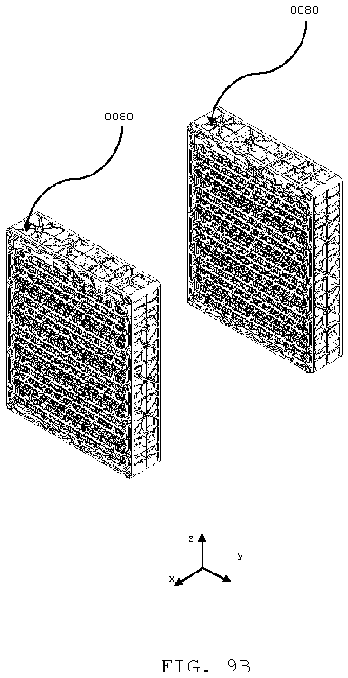

Referring to FIGS. 9A and 9B are perspective views of the stacking of two BCAs.

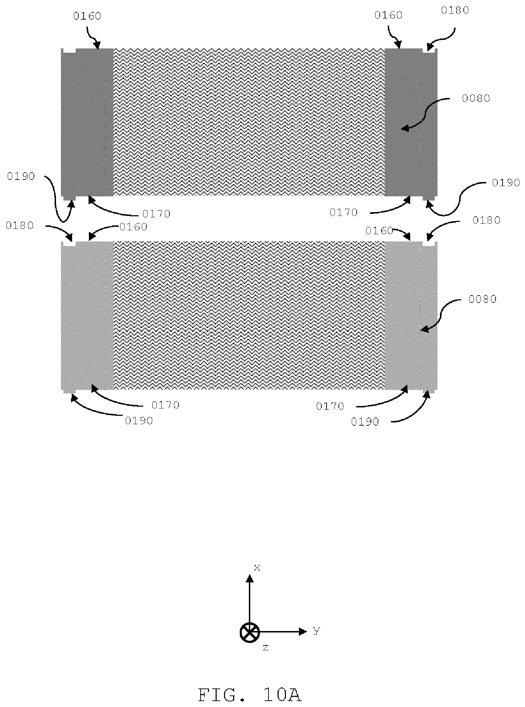

In some embodiments, as illustrated in FIG. 10A, LLC 0080 may comprise a top wall surface 0160 and a bottom wall surface 0170 that are lateral surfaces of the vertical ends of the LLC 0080.

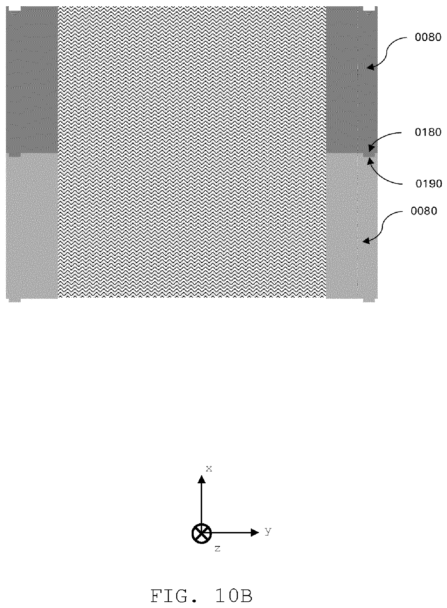

In some embodiments, the top wall surface 0160 and bottom wall surface may comprise complementary interlocking features configured to resist lateral shear when vertically stacked. For example, the top wall surface 0160 may comprise at least one top surface interlocking structures 0180, and the bottom wall surface 0170 may comprise at least one bottom surface interlocking structures 0190, as illustrated in FIG. 10A. The top surface interlocking structures 0180 and the bottom surface interlocking structures 0190 may be located at certain lateral positions so that when two LLCs 0080 are stacked vertically (as illustrated in FIG. 10B), the top surface interlocking structures 0180 and the bottom surface interlocking structures 0190 may combined and therefore provide lateral forces to limit the relative displacement between the two stacked LLCs 0080. For example, a pair of top surface interlocking structure 0180 and bottom surface interlocking structure 0190 may be a protrusion structure and a receiving structure.

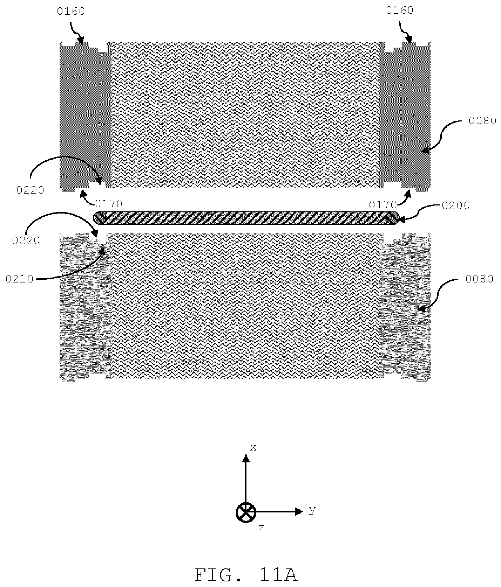

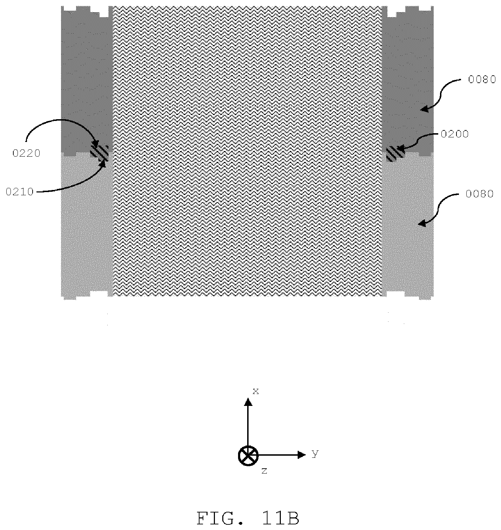

Referring to FIGS. 11A and 11B, in some embodiments, at least one of the top wall surface 0160, the bottom wall surface 0170 or both, may comprise at least one sealing-member-accommodating structure 0220, that is configured to provide a space to accommodate sealing members that is arranged at the interface of two LLCs 0080 to prevent liquid leaking from the interface of the two LLCS. For example, the sealing member 0200 may be an O-ring or adhesive materials. In some embodiments, the bottom wall surface 0170 or both, may further comprise at least one sealing-member-positioning structure 0210 that is configured for limiting the lateral movement of the sealing member 0200. For example, in FIGS. 11A and 11B, the sealing-member-positioning structure 0210 is a gap configured to provide the lateral force to limit the lateral movement of the sealing member 0200. As depicted in FIG. 11B, the sealing member 0200 may be filled with the space provided by the sealing-member-accommodating structure 0220 to provide the sealing effect.

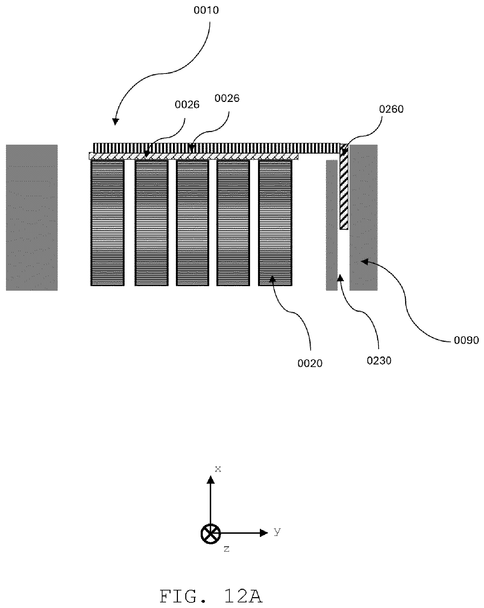

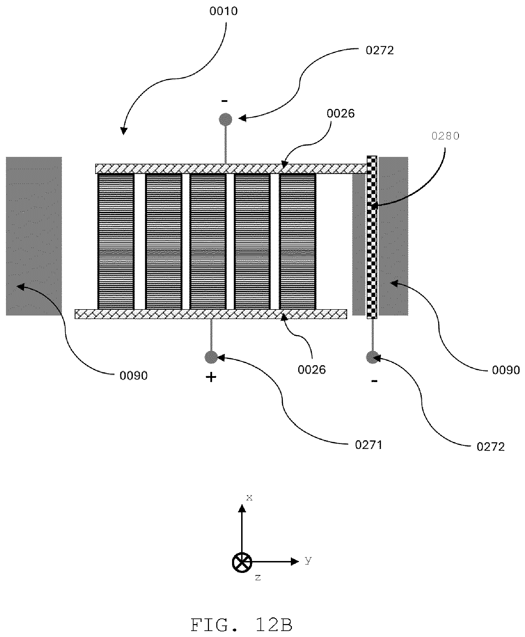

In some embodiments, the peripheral wall 0090 may comprise vertical-wall-channel 0230 that is a hollow space in the peripheral wall 0090. The vertical-wall-channel 0230 may be a through-hole that penetrates the peripheral wall 0090 vertically. The vertical-wall-channel 0230 may be used to accommodate a PCB of a cell monitoring device 0260, which is signally connected to the BCCM 0026 of the BCA 0010, as in FIG. 12A. The vertical-wall-channel 0230 may be used to accommodate a conductor rod 0280, which is used to make both of the positive electrode 0271 and negative electrode 0272 to be disposed at the same terminal of the BCA 0010, as in FIG. 12B.

As disclosed in the '417 application (i.e., Application No. 18/211,417), the vertical-wall-channel 0230 may be used to provide a vertical flow channel that allows the liquid flow vertically. For example, the vertical-wall-channel 0230 may refer to the "inlet channel" and "outlet channel" that is disclosed in the'417 application.

In some embodiments, a BCA 0010 would be integrated with components to form a battery module (hereafter, BM) 3010. For example, BM 3010 may be an assembly that is composed of a BCA 0010 and other components such as: an LLC 0080, heat-regulating components such as heat-dissipation-components, battery-management circuit, and other components. The manufacturing of a BM 3010 is usually an intermediate step in the production of the whole system. That is, the BM 3010 is considered as an intermediate building block to form a higher-level energy storage system, while the BM 3010 is also integrated by a more fundamental building block - the BCs 0020. Therefore, the BM 3010 may also comprise modular interfaces that are configured for integrate the BM 3010 to other BM 3010, and/or to other modules of the underlying larger energy storage system. For example, the BM 3010 may comprise modular-electric-energy-interfaces 3020 (hereafter, MEEI), that is configured to provide electrical connection for the communication (to charge or to discharge) of the electrical energy of the that is stored in or released from the BM 3010. The MEEI 3020 may be electrodes or connectors disposed on the BM 3010. For example, the MEEI 3020 may be a conductor that directly contacts one of the current-transport-plates 0028 of a first BM 3010, and also directly contacts one of the current-transport-plates 0028 of a second BCA 0010. Such a MEEI 3020 then functions as the electric connector between the two BMs 3010.

For example, the BM 3010 may comprise interfaces of the heat-regulating components such as a liquid connector for a thermal-controlling liquid to flow into and out of a BM 3010 to another liquid container or channel, such as the top opening 0094 and the bottom opening 0095 of the LLC 0080. For example, the BM 3010 may comprise interfaces for connecting mechanically to another BM and/or to other modules, such as the top surface interlocking structures 0180 and the bottom surface interlocking structures 0190.

In the present disclosure, the phrase "battery pack" (hereafter, BP) 3030 refers to an assembled, manufactured and encapsulated energy storage system, designed for integration into an electrical equipment (such as EVs, BESS, or others) that is to be powered by the electrical energy discharged from the BP 3030. It is typically produced as a distinct product, often by an entity who supplies the original equipment manufacturer (hereafter, OEM) of the final equipment. The BP 3030 is mechanically stable to ensure its integrity during shipping and final equipment. Integration and assembling processes could include the assembling process of an EV. Additionally, a BP 3030 is equipped with standardized interfaces to facilitate electrical and mechanical integration with the larger system in which it is installed. The spatial dimension of a BP 3030 is also designed with the consideration of available space of the underlying electrical equipment.

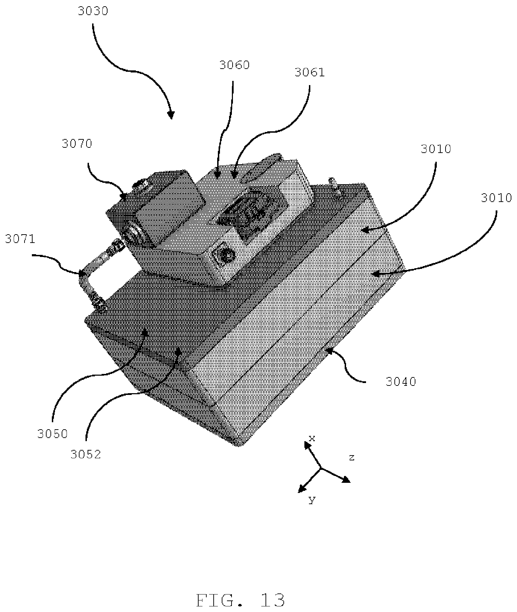

Referring to FIG. 13, which is an illustration of a perspective view of a BP 3030. In some embodiment, as depicted in FIG. 13, the BP 3030 may comprise two BMs 3010 that are assembled with each other in a stacking manner. In other cases, the BP 3030 could comprise only one BM 3010 or more than two BMs 3010. The BP may also comprise a terminal module (hereafter, TM) 3040 that serves as a lid of the BP 3030. The TM 3040 provides electrical insulation so that the BCs 0020 (not shown in FIG. 13) are electrically isolated from the external of the BP 3030. The BP 3030 may also comprise an interface module (hereafter, IM) 3050. The IM 3050 serves not only as a lid but also as an interface of the BP 3030. It is noted that each of BMs 3010 in FIG. 13 may be formed (assembled) by an LLC 0080 and a BCA 0010 as previously disclosed in this disclosure.

In some embodiments, the BP 3030 may be liquid-tight so that the BCAs 0010 of the BMs 3010 enclosed in the BP 3030 may be immersed by thermal-management liquid. For example, the LLCs 0080 of each BMs 3010, the TM 3040 and the IM 3050 may be assembled to form a liquid-tight "battery-pack enclosure" 3031 (hereafter, BP-enclosure). In such an example, the BP-enclosure 3031 is assembled by the LLCs 0080 that provides lateral fluid barrier, and lids on the vertical terminal ends provide vertical fluid barriers. For example, the lids may be the TM 3040 or IM 3050. These lateral and vertical fluid barriers define BP-space 3032 that is enclosed by the BP-enclosure 3031 (while enclosed by those vertical and lateral fluid barriers).

In some embodiments, the TM 3040 and the IM 3050 may also comprise mechanical interfaces for mating, connecting, or sealing to a corresponding BM 3010 or the corresponding LLC 0080. For example, TM 3040 may comprise top surface interlocking structures 0180 and the IM 3050 may comprise bottom surface interlocking structures 0190. For example, the TM and the IM may comprise the sealing member sealing-member-accommodating structure 0220 as earlier mentioned in this disclosure.

As depicted in FIG. 13, the BP 3030 may also comprise an "electrical energy interface module" (hereafter, EEIM) 3060. The EEIM 3060 may comprise an EEIM-casing 3062 which encloses or surrounds an EEIM-space 3061 (not shown in the FIG. 13) that is configured for accommodating circuits for battery management, high-voltage circuits (e.g. the circuit for relaying the high-voltage electrical energy of the BP 3030 to a downstream load such as the EV), or both. The EEIM-casing 3062 may be integrally formed or formed from a plurality EEIM-walls 3065. For example, EEIM-walls 3065 may be portions of the integrally formed EEIM-casing 3062 or may be independent components. The EEIM 3060 may be disposed on the IM 3050 through an assembling process.

In some embodiments, the IM 3050 may comprise an IM-casing 3052 which encloses or surrounds an IM-space 3054 (not shown in the FIG. 13) that is configured for accommodating component that is configured for interfacing the BM 3010 and the EEIM 3060.

In some embodiments, the IM 3050 may further comprise an IM-busbar 3053 (not shown in FIG. 13). One terminal of the IM-busbar 3053 is configured to be electrically connected to the MEEI 3020 of the BM 3010; and another terminal end of the IM-busbar 3053 is configured to be electrically connected to high-voltage circuits arranged the EEIM-space 3061. The EEIM 3060 may comprise "high-voltage interface connectors" 3063 (hereafter, HVIC), which may be disposed on the EEIM-casing 3062 The HVICs 3063 are configured to directly contact the high-voltage circuits arranged the EEIM-space 3061. For example, such electrical connectors may be the terminals of the charging-discharging circuits 0040.

In some embodiments, the EEIM-space 3061 and BP-space 3032 may be hydraulically continuous, so that the components in the EEIM-space 3061 may be immersed by the thermal-management liquid.

In other embodiment, the EEIM-space 3061 and BP-space 3032 may be hydraulically isolated. In such cases, the IM 3050 may comprise at least one IM-electric-channel 3051 (not shown in the figures) structure that is configured to provide a channel between the EEIM-space 3061 and BP-space 3032. For example, the IM-channel 3051 may be a through hole disposed on the side wall of the IM 3050. In some embodiments, the IM-busbar 3053 (not shown in the figures) may be disposed in the IM-electric-channel 3051 and extend to the EEIM-space 3061 and the BP-space 3032 to provide electrical connection between the components in these two accommodation spaces. In some embodiments, to prevent the liquid passing through the IM-electric-channel 3051, the IM 3050 may further comprise at least one sealing member such as an O-ring that is arranged in the IM channel 3051 and is mated tightly both with the inner-wall of the IM-electric-channel 3051 and with the IM-busbar 3053.

In some embodiments, the BP 3030 may comprise at least one liquid interface 3034 for introducing liquid into and/or out of the BP 3030. For example, the liquid interface may be a liquid connector that is disposed on the BP enclosure 3031. For example, the liquid interface 3034 may be disposed on a wall of the IM 3050 or a wall of the TM 3040 as an inlet and/or outlet In some embodiments, the BP 3030 may comprise a first liquid interface 3034 (a) (not shown in the figures) as an inlet of the BP-enclosure 3031 and a second liquid interface 3034 (b) (not shown in the figures).

In some embodiments, the BP 3030 may comprise a liquid tank module (hereafter, LTM) 3070 and a hose 3071. The LTM 3070 functions as a buffer tank to balance the volume fluctuations of the liquid in the BP-space 3032, wherein the volume fluctuations may be caused by the change of working temperature of the BCs 0020 and the thermal-management liquids. In some embodiments, in a process of introducing or filling the liquid into the BP-enclosure 3031, the LTM 3070 may be connected to the external liquid source. One end of the hose 3071 may be connected to the LTM 3070, the other end of the hose 3071 may be connected to the IM 3050. Therefore, liquids may be introduced and flow from the liquid source to the LTM 3070 first, then passing through the hose 3071, finally flow into and filled the entire BP-space 3031. Each of the IM 3050 and LTM 3070 may comprise a hose-connector 3073 that is liquidly connected to hose 3071. The LTM 3070 may comprise an "interface liquid connector" 3072 (hereafter, ILC) that is configured to connect to an external liquid circulation system, such as a liquid source or a liquid circulation system with a pump.

In some embodiments, the immersion-cooled BP 3030 may not connect to nor operate with a liquid circulation system. In such embodiments, once the liquid is introduced and filled the entire BP 3030. The ILC 3072 that is configured to connect to an external liquid circulation system may be sealed to keep the liquid from flowing out of the BP 3030.

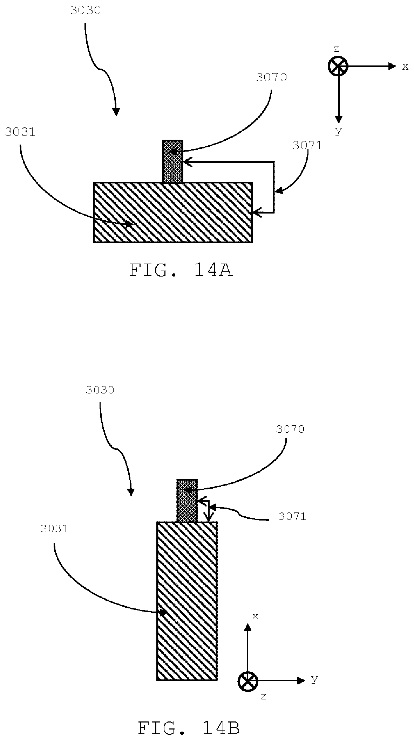

Referring to FIGS. 14A and 14B, which are conceptual diagrams of the BP 3030 wherein the EEIM 3060 is not shown. In some embodiments, considering the different situations where the electrical equipment may have various types of available space to install a BP 3030. The relative orientation of the BP 3030 may not always be the same as the stacking direction of the BM(s) 3010, TM 3040 and the BP-enclosure 3031. However, considering (1) the volume of the liquid filled in the BP 3030 may change with its temperature, when the volume changes, liquid may flow between the LTM 3070 and the IM 3050 (i.e. the function as a buffer tank) or (2) in the process of filling fluid into the BP 3030, it is important for the LTM 3070 to be set at the top of the BP-enclosure 3031 to vent air from the BP 3030 while filling so the liquid in the BP-enclosure 3031, the hose 3071, and the LTM-space 3075 may form a single and continuous body. As depicted in FIG. 14A and 14B, the spatial condition required BP 3030 positioned in the different orientation (in FIG.14A, the gravity points in the minus y direction; in FIG. 14B, the gravity vector points the minus x direction). The LTM 3070 of these two examples are disposed at positions with gravitational potential energy higher than the BP-enclosure 3031.

In some embodiments, the hose 3071 may be bendable and have flexibility so that the fluid connection may be achieved no matter which side of the body of the BP 3030 the LTM 3070 is disposed on.

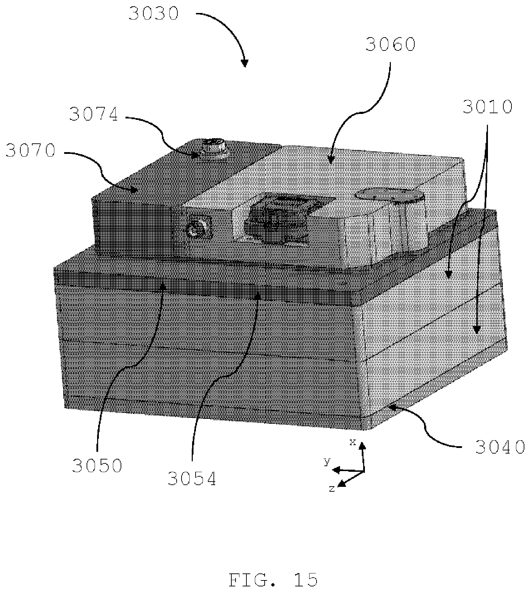

Referring to the FIG.15, in some embodiments, the LTM 3070 may also be directly integrated with the IM 3050, so that the cost and space for the hose 3071 and the hose-connectors 3073 could be saved. In such embodiments, the LTM 3070 may comprise an LTM-casing 3074 which encloses or surrounds an LTM-space 3075 that is configured for accommodating the thermal-management liquid. The LTM-casing 3074 may be integrally formed or formed from a plurality LTM-walls 3076. For example, LTM-walls 3076 may be portions of the integrally formed LTM-casing 3074 or may be independent components. The LTM 3070 may be disposed on the IM 3050 through an assembling process.

In some embodiments, the LTM-casing 3074 and the IM-casing 3054 may be manufactured in a one-piece manner, for example, through a die casting process. Such an integrally formed "tank-interface module" 3900 (hereafter, TIM) may be a continuous body. The TIM 3900 may be configured as a first vertical lid of the stacked BMs 3020. The TIM 3900 may be a rectangular lid that includes a rectangular planar flange portion 3091 and a rectangular raised cover 3092 centrally provided thereon. The rectangular raised cover 3092 comprises four upstanding sidewalls rising from the flange and a top panel closing the cover, together defining a rectangular raised cavity/clearance with the flange.

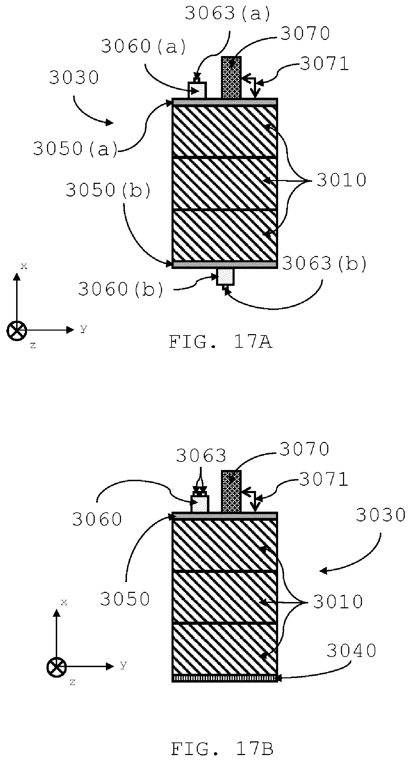

FIGS. 16A, 16B, 17A and 17B are conceptual diagrams of embodiments of BP 3030.

In some embodiments, as depicted in FIG. 16A, the BP 3030 may comprise multiple BMs 3010 that are stacked in the vertical direction. The BP 3030 may further comprise and be assembled with a first IM 3050 (a) configured as a first vertical lid and a second IM 3050 (b) configured as a second vertical lid at the opposite vertical ends of the stacked BMs 3010. The BP 3030 may further comprise a first EEIM 3060 (a) and a second EEIM 3060 (b). The first EEIM 3060 (a) is disposed on the first IM 3050 (a) and the second EEIM 3060 (b) is disposed on the second IM 3050 (b). The first EEIM 3060 (a) may further comprise a first HVIC 3063 (a) that is disposed at one of the two vertical ends of the BP 3030; and the second EEIM 3060 (b) may further comprise a second HVIC 3063 (b) that is disposed at the other vertical end of the BP 3030. Such a configuration is configured for connection to a downstream load with terminals disposed separately.

In some embodiments, as depicted in FIG. 16B, the BP 3030 may comprise multiple BMs 3010 that are stacked in the vertical direction. The BP 3030 may further comprise and be assembled with a TM 3040 configured as a first vertical lid and an IM 3050 configured as a second vertical lid at the opposite vertical ends of the stacked BMs 3010. The BP 3030 may further comprise an EEIM 3060. The EEIM 3060 is disposed on the IM 3050. The EEIM 3060 may further comprise two HVICs 3063 that are disposed on the same one of the two opposite vertical ends of the BP 3030. Such a configuration is configured for connection to a downstream load with terminals disposed closely. The LLCs 0080 may further comprise the vertical-wall-channels 0230. The vertical-wall-channels 0230 of each LLCs 0080 may be sealed together to form a vertical through hole vertically extends through the entire assembly of the stacked BMs 3030. The BP 3030 may further comprise a conductor rod 0280 that is configured to make the first electrode and the second electrode of the circuit formed by all the battery cells connected in series and/or in parallel being both disposed at the second vertical end of the entire assembly of the stacked BMs 3030.

In some embodiments, the conductor rod 0280 may be connected to a first electrode of the circuit formed by electrically connecting all the BCs 0020 in series and/or in parallel through the BCCMs 0026 and MEEIs 3020, at a first vertical end of the entire assembly of the stacked BMs 3030, the first vertical end being adjacent to the TM 3040. The conductor rod may be arranged in the vertical through hole, may extend vertically along the vertical through hole that vertically extends through the entire assembly of the stacked BMs 3030, and may protrude from a second vertical end of the entire assembly of the stacked BMs 3030, the second vertical end being adjacent to the IM 3050. Thus, the first electrode and the second electrode of the circuit formed by all the battery cells connected in series and/or in parallel are both disposed at the second vertical end of the entire assembly of the stacked BMs 3030.

In some embodiments, when both the LTM 3070 and the HVICs 3063 of the BP 3030 are disposed at the same vertical end of the stacked BMs 3020, the ILC 3072 and the HVICs 3063 of the BP 3030 may be arranged on the same vertical end of the stacked BMs 3020. Such an arrangement facilitates system integration, since both the liquid connection to the external coolant channels and the electrical connection to the downstream load can be implemented from the same side of the battery pack. This not only reduces the complexity of installation and maintenance, but also improves the compactness and reliability of the battery pack assembly.

The gravity vector (not shown in the FIG.s 16A-16B) in FIGS. 16A and 16B points in the y-direction, so each of the LTM 3070 of these two examples is installed on the minus-y side of the BP-enclosure 3031 to ensure the LTM 3070 has a higher gravitational potential than the BP-enclosure 3031. In some embodiments, as depicted in FIGS. 17A and 17B, where the gravity vector (not shown in the FIGS. 17A and 17B) points in the minus-x-direction, the LTM 3070 may be disposed on the IM 3050 to ensure the LTM 3070 has a higher gravitational potential than the BP-enclosure 3031.

For example, when the BP 3030 is mounted in an electrical equipment, the LTM 3070 is disposed at a higher position than the BP-enclosure 3031 so that the liquid stored in the LTM 3070 has a higher gravitational potential than the liquid stored in the BP-enclosure 3031.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A battery pack (3030), comprising:
at least one battery module (3010) comprising:
a plurality of battery cells (0020); **characterized by**:
at least one cell holder (0050) configured to limit the position of the battery cells (0020), comprising at least one cell receiving structure (0060);
at least one battery-cell-connecting member (0026) that is an electrical conductor configured to connect to the electrodes of the battery cells (0020); and
a liquid-limiting casing (0080) configured to limit the movement of the thermal-management liquid, comprising:
a peripheral wall (0090) that laterally surrounds a space and extends vertically, comprising:
a top wall surface (0160);
a bottom wall surface (0170); and
an inner wall surface (0101);
wherein the cell holder (0050) is fixed on the inner wall surface (0101);
wherein the top wall surface (0160) and the bottom wall surface (0170) are lateral surfaces of the vertical ends of the liquid-limiting casing (0080);
wherein the top wall surface (0160) comprises at least one top surface interlocking structure (0180) and the bottom wall surface (0170) comprises at least one bottom surface interlocking structure (0190), and
wherein, the top surface interlocking structures (0180) and the bottom surface interlocking structures (0190) are configured to provide lateral forces to limit the relative displacement between two stacked liquid-limiting casings (0080), when the two liquid-limiting casings (0080) are stacked vertically;
a first interface module configured as a first vertical lid that is mated with a first vertical end of the at least one battery module (3010);
a second vertical lid that is mated with a second vertical end of the at least one battery module (3010);
wherein the second vertical lid is a terminal module (3040) or a second interface module;
wherein the first interface module further comprises a first electrical energy interface module configured for accommodating a circuit for relaying the high-voltage electrical energy of the battery pack (3030) to a downstream load;
wherein when the second vertical lid is the second interface module, the second interface module further comprises a second electrical energy interface module configured for accommodating the circuit for relaying the high-voltage electrical energy of the battery pack (3030) to the downstream load;
a liquid-tight battery-pack enclosure (3031);
wherein the battery-pack enclosure (3031) is:
assembled by the liquid-limiting casings (0080) of each battery module (3010), the first interface module, and the terminal module (3040), or
assembled by the liquid-limiting casings (0080) of each battery module (3010), the first interface module, and the second interface module; and
a liquid tank module (3070) configured as a buffer tank to balance the volume fluctuations of the liquid in the battery-pack enclosure (3031) and the liquid interface for liquid connection of the battery pack (3030) and external liquid channels;
wherein, when the battery pack (3030) is mounted in an electrical equipment, the liquid tank module (3070) is disposed at a higher position than the battery-pack enclosure (3031) so that the liquid stored in the liquid tank module (3070) has a higher gravitational potential than the liquid stored in the battery-pack enclosure (3031).

2. The battery pack (3030) of claim 1, **characterized in that**:
the battery pack (3030) further comprises a flexible hose (3071); and
each of the first interface module and the liquid tank module (3070) further comprises a hose-connector (3073) that is fluidly and mechanically connected to the hose (3071).

3. The battery pack (3030) of claim 1, **characterized in that**:
the second vertical lid is the second interface module; and
the battery-pack enclosure (3031) is assembled by the liquid-limiting casings (0080) of each battery module (3010), the first interface module, and the second interface module.

4. The battery pack (3030) of claim 1, **characterized in that**:
the second vertical lid is the terminal module (3040); and
the battery-pack enclosure (3031) is assembled by the liquid-limiting casings (0080) of each battery module (3010), the first interface module, and the terminal module (3040).

5. The battery pack (3030) of claim 1, **characterized in that**:
each liquid-limiting casing (0080) of each battery module (3010) further comprises a vertical-wall-channel (0230);
the vertical-wall-channels (0230) of the liquid-limiting casings (0080) are sealed together to form a vertical through hole that vertically extends through the entire assembly of the stacked battery modules (3010).

6. The battery pack (3030) of claim 5, **characterized in that**:
the battery pack (3030) further comprises a conductor rod (0280), wherein the conductor rod (0280) is arranged in the vertical through hole.

7. The battery pack (3030) of claim 6, **characterized in that**:
the conductor rod (0280) is connected to a first electrode of the circuit formed by electrically connecting all the battery cells (0020) in series and/or in parallel, at a first vertical end of the entire assembly of the stacked battery modules (3010), wherein the first vertical end is adjacent to the terminal module (3040); and
the conductor rod (0280) protrudes from a second vertical end of the entire assembly of the stacked battery modules (3010), wherein the second vertical end is adjacent to the first interface module.

8. The battery pack (3030) of claim 1, **characterized in that**:
the liquid-limiting casing (0080) further comprises at least one cell-holder stopping structure (0140) that extends from one of the inner surfaces of the peripheral wall (0090) and extends inwardly along the lateral direction; and
the cell-holder stopping structure (0140) is configured to limit the vertical movement of the cell holder (0050) by providing a vertical force on the cell holder (0050).

9. The battery pack (3030) of claim 8, **characterized in that**:
the cell-holder stopping structure (0140) further comprises an inner boundary (0141);
the inner boundary (0141) is a surface of the cell-holder stopping structure (0140) that is parallel to the side wall on which the cell-holder stopping structure (0140) disposed; and
a lateral section view of the inner boundary (0141) is a line or a curved line.

10. The battery pack (3030) of claim 9, **characterized in that** the lateral cross-section of the inner boundary (0141) is a curved line with a radius of curvature equal to or greater than a radius of the battery cell (0020) in lateral cross-section.

11. The battery pack (3030) of claim 1, **characterized in that** the liquid tank module (3070) is directly integrated with the first interface module, so that no hose is required to connect the liquid tank module (3070) and the first interface module.

12. The battery pack (3030) of claim 1, **characterized in that** the first electrical energy interface module defines a first electrical energy interface module space, the battery-pack enclosure (3031) defines a battery-pack space, and the first electrical energy interface module space and the battery-pack space are hydraulically continuous such that thermal-management liquid immerses components within both spaces.

13. The battery pack (3030) of claim 1, **characterized in that** the first electrical energy interface module defines a first electrical energy interface module space, the battery-pack enclosure (3031) defines a battery-pack space, and the first electrical energy interface module space and the battery-pack space are hydraulically isolated, and the first interface module comprises an electric channel sealed by a sealing member (0200) that tightly mates with a busbar.

14. The battery pack (3030) of claim 8, **characterized in that** the liquid-limiting casing (0080) further comprises at least one cell-holder fixing structure (0150) including a fastener hole (0151), the cell holder (0050) being mechanically fixed to the liquid-limiting casing (0080) by a fixing fastener (0152).

15. The battery pack (3030) of claim 1, **characterized in that** the battery-cell-connecting member (0026) comprises a cell-contact plate (0027) and a current-transport plate (0028), the cell-contact plate (0027) including a fusing structure (0025) configured to melt when the current is overloaded.
